Europäisches Patentamt

European Patent Office

Office européen des brevets

(11) Numéro de publication : **0 331 560 B1**

(12) # FASCICULE DE BREVET EUROPEEN

(45) Date de publication du fascicule du brevet :
**29.04.92 Bulletin 92/18**

(51) Int. Cl.<sup>5</sup> : **A01C 5/06**

(21) Numéro de dépôt : **89400510.7**

(22) Date de dépôt : **23.02.89**

(54) Perfectionnement aux roues de plombage des semoirs.

(30) Priorité : **04.03.88 FR 8802755**

(43) Date de publication de la demande :
**06.09.89 Bulletin 89/36**

(45) Mention de la délivrance du brevet :
**29.04.92 Bulletin 92/18**

(84) Etats contractants désignés :
**AT BE CH DE ES FR GB GR IT LI LU NL SE**

(56) Documents cités :
**DE-A- 1 457 830**
**DE-A- 3 439 476**
**FR-A- 2 257 217**
**US-A- 2 332 012**
**US-A- 4 408 551**

(73) Titulaire : **Société SOGEFINA Société de Gestion Financière Armoricaine (Société Anonyme)**
**49-51, rue de Ponthieu**
**F-75008 Paris (FR)**

(72) Inventeur : **Herriau, Auguste**
**33 Avenue Foch**
**F-75116 Paris (FR)**
Inventeur : **Herriau, Paul**
**Rue Lucien Sampaix Proville**
**F-59400 Cambrai (FR)**

(74) Mandataire : **Dawidowicz, Armand**
**Cabinet Dawidowicz 18, Boulevard Pereire**
**F-75017 Paris (FR)**

EP 0 331 560 B1

Jouve, 18, rue Saint-Denis, 75001 PARIS

**Description**

Les roues de plombage sont des roues qui, dans les semoirs, tassent le fond du sillon dans lequel ont été déposées les graines pour immobiliser celles-ci en les enfonçant légèrement dans la terre, ainsi que pour améliorer le contact entre la graine et la terre afin de faciliter la germination, la pression de la roue favorisant la remontée d'humidité.

Une telle roue de plombage, utilisée dans un semoir dit de précision, est décrite dans FR-A-2.478.942. Dans un tel semoir qui assure une mise en terre des graines avec une précision extrêmement élevée, il est encore plus nécessaire d'éviter que la graine ne soit déplacée, au moment où elle est enfoncée par la roue de plombage, sous l'effet de la vitesse de glissement de celle-ci. Pour éviter ce glissement, le brevet ci-dessus propose d'entraîner la roue de plombage de manière que sa vitesse périphérique soit sensiblement égale à la vitesse d'avancement du semoir et de préférence supérieure de 1 à 2% à ladite vitesse. Dans la pratique et comme proposé dans ce brevet, la roue de plombage est montée à rotation sur un axe qui est associé en hauteur au soc, lequel ouvre le sillon et amène, par un canal réalisé sur sa face arrière qui entoure la périphérie inférieure avant de la roue de plombage, les graines dans le dièdre entre le fond du sillon et la périphérie de ladite roue. La roue est entraînée en rotation par un dispositif de transmission de tout type connu tel qu'un système à pignons et à chaîne depuis une des roues du semoir, en pratique la roue de jauge qui règle le terrage du soc de chaque élément, ou la prise de force du tracteur.

Ce mode de réalisation présente divers inconvénients parmi lesquels on peut citer la nécessité pour chaque roue de plombage d'une transmission supplémentaire sujette à des ruptures et à des encrassements et le fait que la roue de jauge de chaque élément étant placée à distance, en principe en arrière de la ligne axiale transversale de la roue de plombage, les accidents de terrain que la roue de jauge peut rencontrer tels que pierre, sillon transversal ou zone de terrain localisée à défaut d'adhérence, se répercutent sur la profondeur du sillon et la vitesse de rotation de la roue de plombage. En outre les roues de plombage sont habituellement étroites, leur largeur correspondant en général à la largeur du sillon et, pour empêcher la terre de coller sur leur périphérie et de remonter les graines enrobées par la terre, il est nécessaire de prévoir sur chaque roue en décrotteur qui freine la roue de plombage, ce qui pourrait accroître le glissement et ce à quoi on remédie par la transmission à chaîne ou à courroie reliant la roue de plombage à la roue de jauge laquelle porte la charge de l'élément et a donc une bonne adhérence au sol.

La présente invention a pour but de remédier à ces divers inconvénients et elle a pour objet un semoir de précision comprenant une roue de plombage coaxiale ou excentrique et solidaire en rotation d'au moins une roue de jauge ayant un rayon de roulement plus petit que le rayon de la périphérie de la roue de plombage, caractérisée en ce que la roue de jauge est garnie d'un pneumatique basse pression dont le revêtement périphérique est en contact étanche avec la surface latérale de la roue de plombage pour éviter les infiltrations d'eau et de boue entre elles.

Par rayon de roulement de la roue de jauge on entend le résultat de la division par $2\pi$ de la distance parcourue nécessaire pour faire tourner la roue de jauge très exactement d'un tour, la roue de jauge étant garnie d'un pneumatique basse pression, qui assure un désencrassement automatique mais dont le rayon de roulement, tel que ci-dessus défini, peut varier avec la pression de gonflage. L'ensemble roue de plombage-roue de jauge laisse derrière lui une trace comportant une partie plane de faible enfoncement au droit de la roue de jauge et un sillon plus profond au droit de la roue de plombage avec, au-delà du sillon de la roue de plombage, une petite butte de terre résultant du rejet de la terre de part et d'autre du soc, celle située du côté de la roue de jauge ayant été écrasée par cette dernière.

FR-A-2.257.217 et DE-C-3.122.717 décrivent une roue plombeuse munie de prolongements cylindriques latéraux coaxiaux de plus petit diamètre, qui forment l'équivalent d'une roue de jauge. Cependant, cet ensemble monobloc ne permet pas une adaptation à la nature du terrain ou à la présence d'obstacles tels que des pierres, de sorte que la roue de plombage enfonce les grains trop profondément ou, au contraire, ne les atteint pas.

De préférence le rayon de roulement de la roue de jauge est inférieur de 2 à 15%, de préférence en moyenne 10%, au rayon de la roue de plombage.

Selon une autre caractéristique de l'invention, la roue de plombage est associée avec une rasette située à l'opposé de la roue de jauge par rapport à la roue de plombage, rasette qui repousse la butte de terre et abat dans le sillon, pour le combler, une petite bande de terre bordant ledit sillon de la roue de plombage.

Selon un mode de réalisation préférentiel, la rasette constituée par une lame oblique dont le bord inférieur est incliné vers le bas en direction de la face voisine de la roue de plombage et jusqu'à celle-ci, en se prolongeant ensuite au-dessus du sillon et derrière la roue de jauge par une partie horizontale, est portée par un bras articulé autour d'un axe transversal, de préférence l'axe de roue et prend appui par un patin sur le sol de la trace de la roue de jauge. Le patin prenant appui sur la trace de la roue de jauge qui est bien nivelée, le rebouchage du sillon de la roue de jauge, donc le recouvrement des graines, est d'une hauteur constante.

Dans des cas spéciaux de graines devant être recouvertes d'une épaisseur de terre inférieure ou supérieure à la différence entre le rayon de la roue de plombage et le rayon minimum résultant de l'écrasement du revêtement déformable de la roue de jauge, il est possible, pour obtenir une épaisseur de recouvrement réduite, de prévoir une rasette dont le bord inférieur est décalé vers le bas au droit du sillon de la roue de plombage ou une rasette portant un élément réglable en hauteur qui vient s'engager dans le sillon de la roue de plombage. Lorsque l'épaisseur du recouvrement doit être supérieure à la profondeur du sillon, on peut prévoir une vis de réglage de hauteur entre la rasette et le patin et éventuellement prévoir en pointe de la rasette une lame formant soc pour reprendre latéralement un volume de terre supérieur au volume de la butte créée par le soc du semoir.

Afin de permettre de modifier la différence de niveau des génératrices basses des deux roues de plombage et de jauge en conservant les rayons des deux roues qui correspondent à une vitesse périphérique de la roue de jauge supérieure de quelques pour cent à la vitesse d'avancement du semoir, on peut prévoir, selon une forme de réalisation préférée de l'invention, d'interposer entre l'axe de la roue de plombage et l'axe de la roue de jauge un dispositif permettant leur excentrement relatif au moins selon la direction verticale. Lorsque les roues sont excentrées par rapport à la position coaxiale, les niveaux des génératrices inférieures des deux roues sont à des niveaux distants de la différence des rayons augmentée de l'excentrement.

On connaît un semoir (voir US-A-2.332.012) dans lequel un dispositif de formation du sillon est constitué de deux disques inclinés l'un par rapport à l'autre et portant des roues de jauge excentrées afin de régler la profondeur du sillon. On n'utilise pas dans ce document de roue de jauge à pneumatique accolée à une roue de plombage, comme c'est le cas de la présente invention.

Avantageusement, la roue de jauge est montée avec interposition d'une bague excentrique autour de l'axe de la roue de jauge. L'excentrement est réglé en faisant tourner l'axe de la roue de jauge sur lequel est bloquée à la rotation la bague excentrique.

En ce qui concerne la transmission de la rotation entre la roue de jauge en position excentrée et la roue de plombage, une telle transmission semblait devoir poser des problèmes, du fait de l'excentrement des deux axes.

Toutefois, la roue de jauge a, dans l'invention, pour but, non d'entrainer la roue de plombage à une vitesse parfaitement définie, mais de lui fournir un couple tendant à lui donner de l'avance par rapport à la vitesse de rotation résultant de son roulement au fond du sillon. Or, il a été constaté de façon étonnante que, lorsque la roue de jauge est munie d'un bandage pneumatique maintenu en appui contre la face latérale de la roue de plombage, la résultante des forces de frottement assure l'entrainement recherché de la roue de plombage. Cet entraînement par la roue de jauge est encore plus favorisé par le fait que le pneumatique s'écrase au contact du sol, ce qui provoque un accroissement de sa largeur donc de la pression exercée en cet endroit par le pneumatique de la roue de jauge contre le flanc de la roue de plombage. De ce fait le couple d'entraînement en rotation exercé sur la roue de plombage par la roue de jauge devient plus important que le couple résistant dû aux frottements s'exerçant sur la périphérie de la roue de plombage.

En conséquence, selon une autre caractéristique de la présente invention, la roue de jauge est maintenue en contact de frottement glissant, par un grand cercle de sa face latérale, avec la surface latérale plane adjacente de la roue de plombage.

Pour obtenir un entraînement positif entre la roue de jauge et la roue de plombage, il serait possible d'avoir recours à un engrenage, lequel serait obligatoirement complexe du fait de l'excentrement et dont la mise en place pratique poserait des problèmes insolubles. Pour éviter cet engrenage tout en assurant un entraînement qui empêche un glissement entre roue de plombage et roue de jauge supérieur à quelques degrés, il est possible d'avoir recours à un entrainement du type en cage d'écureuil, des rayons à écartement angulaire constant partant radialement du moyeu de la roue de jauge et s'engageant entre des picots, au même écartement angulaire que les rayons de la roue de jauge, portés par la surface latérale adjacente de la roue de plombage.

L'étanchéité presque parfaite obtenue par l'appui du pneumatique contre la roue de plombage, en plus du désencrassement automatique mentionné plus haut, empêche la terre de pénétrer à l'intérieur et de bloquer le système. En outre, le pneumatique essuie, à la manière d'un essuie-glace, la face latérale de la roue plombeuse qui est ainsi toujours parfaitement lisse, ce qui est une condition importante pour le bon fonctionnement du système car, si la résistance due au glissement est trop importante, l'ensemble ne fonctionne pas.

Dans le cas de la variante de l'invention dans laquelle la roue de jauge peut être excentrée par rapport à la roue de plombage, on peut prévoir que l'excentrement selon l'horizontale de la roue de jauge par rapport à la roue de plombage est tel que la distance entre la périphérie de la roue de plombage et la périphérie de la roue de jauge est plus grande à l'arrière, ou au minimum égale qu'à l'avant dans le sens d'avancement du semoir.

L'invention sera décrite plus en détail ci-après avec référence aux dessins ci-annexés qui représentent schématiquement un exemple de réalisation d'un élément de semoir comportant une roue de plombage conforme à l'invention et dans lesquels :

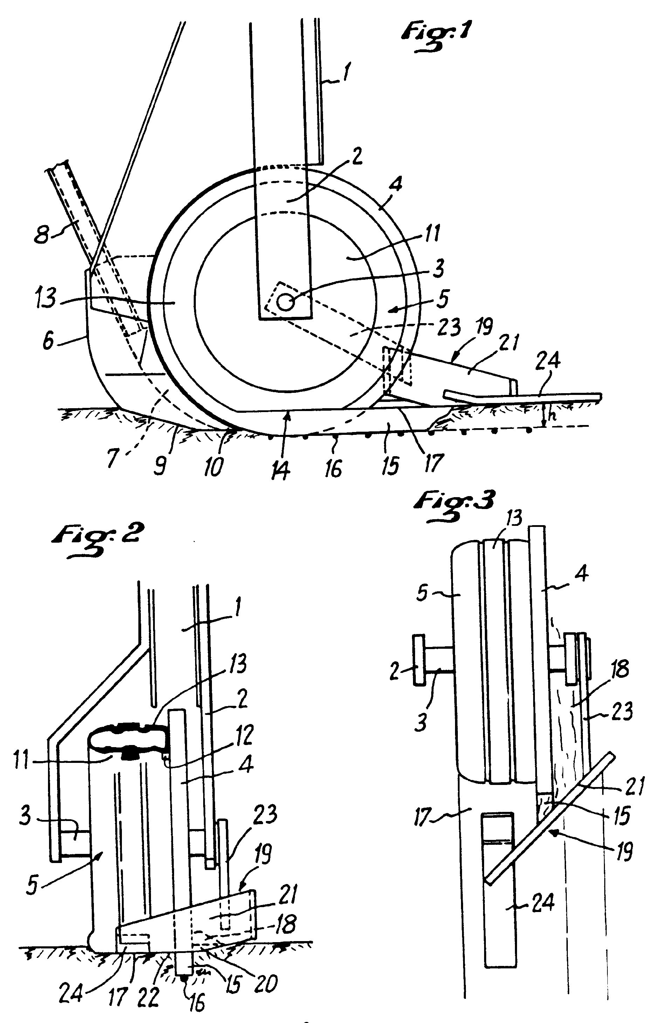

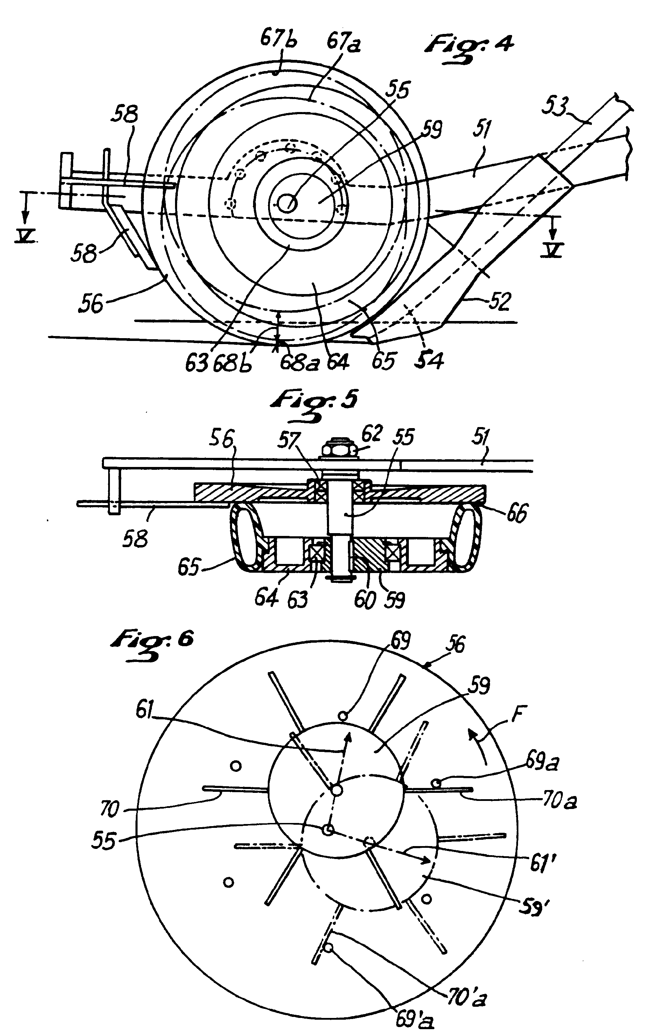

La figure 1 est une vue en élévation latérale de l'élément de semoir; la figure 2 en est une vue en élévation par l'arrière avec coupe partielle par II-II de figure 1; la figure 3 en est une vue en plan par dessus; la figure 4 est une vue en élévation latérale du semoir au droit de la roue de plombage selon une variante de l'invention; la figure 5 est une vue en coupe par V-V de la figure 4 limitée aux roues de jauge et de plombage; et la figure 6 est un schéma expliquant le mécanisme d'un entraînement positif de la roue de plombage par la roue de jauge excentrée des figures 4 et 5.

Dans les figures 1 à 3, la référence 1 désigne le bâti de l'élément et la référence 2 la fourche qui porte par un axe 3, la roue de plombage 4 à laquelle est accolée, conformément à l'invention; la roue de jauge 5 qui sera décrite plus en détail ci-après, le sens d'avancement étant de la droite vers la gauche à la figure 1.

La référence 6 désigne le soc qui est du type faisant l'objet de FR-A-2.478.942, c'est-à-dire que la partie arrière du soc 6 s'applique sur la partie périphérique avant inférieure de la roue de plombage 4 et que dans la surface de cette partie arrière du soc est réalisée une gorge 7 constituant la partie terminale du canal pneumatique 8 d'amenée des graines au fond du sillon 9 ouvert par le soc, dans le dièdre 10 entre le fond du sillon et la roue de plombage.

La roue de plombage 4 est une roue à surface périphérique rigide. Elle est en pratique constituée par un disque métallique dont l'épaisseur est égale à la largeur de la face arrière du soc 6. La roue de jauge 5 dont la jante 11 est calée sur l'arbre 3 avec son jonc intérieur 12 accolé étroitement à la surface latérale de la roue de plombage 4, est garnie d'un pneumatique basse pression 13. Le rayon nominal du pneumatique basse pression 13 est égal à environ les 9/10èmes du rayon de la roue de plombage 4, ce qui fixe sensiblement le rayon de roulement de la roue de jauge 5 à un peu moins de 90% du rayon de la roue de plombage 4. La pression de gonflage du pneumatique 13 permet de faire varier l'écrasement 14 du pneumatique, donc l'enfoncement du soc 6, la profondeur du sillon 9 et le niveau de la génératrice inférieure de la roue de plombage 4.

Comme visible à la figure 2, le passage de l'élément de semoir comportant le soc 6, la roue de plombage 4 et la roue de jauge 5, laisse une trace comportant un sillon 15 au fond duquel se trouvent enfoncées les graines 16 avec, derrière la roue de jauge, une surface tassée plane 17 et du côté opposé une butte de terre 18 rejetée latéralement par le soc 6. Conformément à l'invention, on utilise la planéité de la trace 17 de la roue de jauge 5 pour guider en hauteur une rasette désignée par la référence générale 19 pour recouvrir les graines 16 en recombinant le sillon 15 avec la terre de la butte 18 et avec la terre d'une petite bande 20 bordant le sillon 15. La rasette 19 peut être remplacée par un dispositif de râclage équivalent tel qu'un ressort vertical ou une tige souple.

La rasette 19 comporte une lame oblique 21 dont le bord inférieur 22, dans le mode de réalisation représenté à titre d'exemple, s'abaisse dans sa partie avant pour venir au droit de la face latérale voisine de la roue de plombage 4 puis se prolonge vers l'arrière, au-dessus du sillon 15 et de la partie proche de la trace 17, par une partie horizontale. La rasette 19 est articulée par un bras 23 autour de l'axe 3 et elle prend appui à son extrémité arrière sur le sol nivelé de la trace 17 par un patin 24. On obtient ainsi un rebouchage précis du sillon 15 avec un recouvrement de hauteur h parfaitement constante des graines 16. Il est bien évident qu'en donnant au bord inférieur 22 de la lame 20 de la rasette un autre profil, on peut modifier le profil transversal de la trace après passage de la rasette pour modifier la hauteur h de recouvrement des graines avec toujours la même constante de cette hauteur en raison de la planéité de la trace 17 de la roue de jauge 5.

On se réfère maintenant aux figures 4 à 6 qui représentent une variante de l'invention. Dans ces figures, la référence 51 désigne le bâti du semoir, la référence 52 le soc qui ouvre dans le sol un sillon, la référence 53 un tuyau d'amenée pneumatique des graines au fond du sillon, la référence 54 désignant la partie de la canalisation pneumatique d'amenée des graines qui entoure la périphérie inférieure avant de la roue. A la figure 4, le sens d'avancement est de la gauche vers la droite.

La référence 55 désigne l'axe de la roue de plombage 56 montée à rotation par des roulements 57. Avec la roue de plombage 56 coopèrent, de façon connue, des dispositifs décrotteurs 58 dont l'action crée un couple de frottement résistant qui a tendance à provoquer un glissement de la roue de plombage par rapport au fond du sillon, glissement que l'invention a pour but d'éviter.

Sur l'axe 55 de la roue de plombage est monté un excentrique 59 qui est claveté en 60 sur ledit axe. Pour régler la direction d'excentrement, c'est-à-dire l'orientation de l'axe 61 joignant les centres, on débloque l'écrou 62 de blocage de l'axe de roue 55 sur le bâti 51, on régle cette orientation et on resserre l'écrou 62.

A la périphérie de l'excentrique 59 est montée à rotation, par des roulements 63, la roue de jauge 64 garnie d'un pneumatique 65. Le pneumatique 65 est en appui sous pression le long du grand cercle 66 contre la face latérale de la roue de plombage 56, cette pression étant maximale au niveau du sol du fait de l'écrasement du pneumatique 65.

Dans la figure 4, les cercles en traits mixtes 67a et 67b représentent les deux positions d'excentrement maximal selon la verticale de la roue de jauge 64 par rapport à la roue de plombage 56, ces deux positions correspondant aux profondeurs de sillon 68a et 68b. On notera que l'excentrement selon l'horizontale de la roue de jauge 64, 65 est tel, comme cela est particulièrement visible à la figure 5, que la distance entre la périphérie de la roue de plombage 56 et la périphérie de la roue de jauge 64-65 est plus grande à l'arrière qu'à l'avant. Cela permet de repousser la terre alors que, si la disposition relative était inverse, la terre aurait tendance à être ramenée à l'intérieur du système, en particulier lorsque la terre est collante.

Le couple transmis par frottement le long de la ligne de contact 66 par la roue de jauge 64 à la roue de plombage 56 s'est avéré suffisant en pratique pour surmonter les couples résistants s'exerçant sur cette dernière et éviter tout glissement.

Il est toutefois possible, comme illustré à la figure 6, de réaliser un entraînement positif de la roue de plombage 56 à partir de la roue de jauge 64-65, nonobstant l'excentrement des deux roues, en montant sur le flanc de la roue de plombage 56 faisant face à la roue de jauge 64 des picots en saillie 69 répartis angulairement et par exemple écartés de 60°, et de munir la face en regard de la roue de jauge de rayons 70 susceptibles de venir en appui derrière les picots 69. Comme représenté dans la figure 6 pour deux directions 61-61' d'excentrement de l'excentrique 59-59', un des rayons 70a, 70'a vient en butée derrière le picot 69a-69'a situé en avant selon la rotation F des roues et assure éventuellement l'entraînement de ce picot et de la roue de plombage sur un secteur d'environ 60°.

## Revendications

1. Semoir de précision comprenant une roue de plombage (4) coaxiale ou excentrique et solidaire en rotation d'au moins une roue de jauge (5) ayant un rayon de roulement plus petit que le rayon de la périphérie de la roue de plombage (4), caractérisé en ce que la roue de jauge (5) est garnie d'un pneumatique basse pression (13) dont le revêtement périphérique (13) est en contact étanche avec la surface latérale de la roue de plombage (4).

2. Semoir de précision selon la revendication 1, caractérisé en ce que le rayon de roulement de la roue de jauge (5) est inférieur de 2 à 15%, de préférence en moyenne 10%, au rayon de la roue de plombage (4).

3. Semoir de précision selon l'une quelconque des revendications 1 et 2, caractérisé en ce que la roue de plombage (4) est associée avec un dispositif de raclage tel qu'un ressort vertical, une tige souple ou une rasette (19) situé à l'opposé de la roue de jauge (5) par rapport à la roue de plombage (4), dispositif qui repousse la butte de terre (18) et abat dans le sillon, pour le combler une petite bande de terre (20) bordant ledit sillon (15) de la roue de plombage.

4. Semoir de précision selon la revendication 3, caractérisé en ce que la rasette (19) constituée par une lame oblique (21) dont le bord inférieur (22) est incliné vers le bas en direction de la face voisine de la roue de plombage (4) et jusqu'à celle-ci, en se prolongeant ensuite au-dessus du sillon (15) et derrière la roue de jauge (5) par une partie horizontale, est portée par un bras (23) articulé autour d'un axe transversal, de préférence l'axe (3) de roue et prend appui par un patin (24) sur le sol de la trace (17) de la roue de jauge (5).

5. Semoir de précision selon l'une quelconque des revendications 1 à 4, caractérisé en ce qu'il comporte entre l'axe (55) de la roue de plombage (56) et l'axe de la roue de jauge (64) un dispositif (59) permettant leur excentrement relatif au moins selon la direction verticale.

6. Semoir de précision selon la revendication 5, caractérisé en ce que la roue de jauge (64) est montée avec interposition d'un bague excentrique (59) autour de l'axe (55) de la roue de plombage (56).

7. Semoir de précision selon la revendication 6, caractérisé en ce que l'excentrement est réglé en faisant tourner l'axe de la roue de jauge sur lequel est bloquée (60) à la rotation la bague excentrique (59).

8. Semoir de précision selon l'une quelconque des revendications 5 à 7, caractérisé en ce que la roue de jauge (64) est maintenue en contact de frottement glissant, par un grand cercle (66) de sa face latérale, avec la surface latérale plane adjacente de la roue de plombage (56).

9. Semoir de précision selon l'une quelconque des revendications 5 à 8, caractérisé en ce qu'un dispositif d'entraînement du type en cage d'écureuil associe les roues de jauge (64) et de plombage (56), des rayons (70) à écartement angulaire constant partant radialement du moyeu de la roue de jauge (64) et s'engageant entre des picots (69), au même écartement angulaire que les rayons de la roue de jauge, portés par la surface latérale adjacente de la roue de plombage (56).

10. Semoir de précision selon l'une quelconque des revendications 5 à 8, caractérisé en ce que l'excentrement selon l'horizontale de la roue de jauge (64, 65) par rapport à la roue de plombage (56) est tel que la distance entre la périphérie de la roue de plombage (56) et la périphérie de la roue de jauge (64, 65) est plus grande à l'arrière, ou au minimum égale, qu'à l'avant dans le sens d'avancement du semoir.

## Claims

1. A precision seed drill comprising a coaxial or eccentric press wheel (4), rigid in rotation with at least one gauge wheel (5) having a rolling radius smaller than the radius of the periphery of the press wheel (4), characterized in that the gauge wheel (5) is equipped with a low pressure pneumatic tire (13) the peripheral coating (13) of which is in intimate contact with the side surface of the press wheel (4).

2. A precision seed drill according to claim 1, characterized in that the rolling radius of the gauge wheel (5) is inferior by 2 to 15%, and preferably by 10% as average, to the radius of the press wheel (4).

3. A precision seed drill according to claims 1 and 2, characterized in that the press wheel (4) is associated with a scraping device such as a vertical spring, a flexible rod or a hoe (19) situated at the opposite of gauge wheel (5) with respect to press wheel (4), a device which pushes back the earth hump (18) and rejects in the furrow, in order to fill it, a small strip of earth (20) bordering said furrow (5) of the press wheel.

4. A precision seed drill according to claim 3, characterized in that the hoe (19) is made of an oblique blade (21) the lower edge (22) of which is inclined downwardly in the direction of the face which is close to the press wheel (4) and up to the latter, extending then above the furrow (15) and at the rear of the gauge wheel (5) by a horizontal portion, and is carried by an arm (13) articulated about a transverse axis, preferably the wheel axis (3) and bears via a shoe (24) on the ground of the trace (17) of the gauge wheel (5).

5. A precision seed drill according to any one of claims 1 to 4, characterized in that it includes between axis (5) of press wheel (56) and the axis of the gauge wheel (64) a device (59) allowing their relative degree of eccentricity at least in the vertical direction.

6. A precision seed drill according to claim 5, characterized in that the gauge wheel (64) is mounted with the interposition of an eccentric ring (59) about the axis (55) of the press wheel (56).

7. A precision seed drill according to claim 6, characterized in that the degree of eccentricity is set by rotating the axis of the gauge wheel on which is rotatably locked (at 60) the eccentric ring (59).

8. A precision seed drill according to any one of claims 5 through 7, characterized in that the gauge wheel (64) is held in sliding rubbing contact, via a great circle (66) of its side face, with the adjacent plane side surface of the press wheel (56).

9. A precision seed drill according to any one of claims 5 through 8, characterized in that a driving device of the squirrel cage type associates the gauge wheel (64) and the press wheel (56), whereby radii (70) with constant angular spacing and starting radially from the hub of gauge wheel (6) and engaging between pins (69), of same angular spacing as the radii of the gauge wheel, carried by the adjacent side surface of the press wheel (56).

10. A precision seed drill according to any one of claims 5 through 8,

characterized in that the degree of eccentricity along the horizontal of gauge wheel (64, 65) with respect to the press wheel (56) is such that the distance between the periphery of the press wheel (56) and the periphery of the gauge wheel (64, 65) is larger at the rear, or at least equal, than at the front in the advance direction of the drill.

## Patentansprüche

1. Präzisions-Sämaschine mit einem koaxialen oder exzentrischen Druckrad (4), das drehfest mit mindestens einem Meßrad (5) verbunden ist, das einen Rollradius aufweist, der kleiner ist als der Radius des Umfanges des Druckrades (4), **dadurch gekennzeichnet**, daß das Meßrad mit einem Niederdruckreifen (13) ausgestattet ist, dessen peripherer Mantel sich in dichter Anlage an der Seitenfläche des Druckrades (4) befindet.

2. Präzisions-Sämaschine nach Anspruch 1, **dadurch gekennzeichnet**, daß der Rollradius des Meßrades (5) um 2 bis 15 %, vorzugsweise im Mittel um 10 % geringer ist als der Radius des Druckrades (4).

3. Präzisions-Sämaschine nach einem der Ansprüche 1 und 2, **dadurch gekennzeichnet**, daß das Druckrad (4) mit einer Schrappervorrichtung, wie einer senkrechten Feder, einer biegsamen Stange oder einem Vorschäler (19), verbunden ist, die auf der dem Meßrad gegenüberliegenden Seite des Druckrades (4) angeordnet ist, wobei die Vorrichtung den Erdhaufen (18) wegdrückt und in der Furche abträgt um seitlich der Furche (15) des Druckrades (4) einen kleinen Erdstreifen (20) anzuhäufeln.

4. Präzisions-Sämaschine nach Anspruch 3, **dadurch gekennzeichnet**, daß der Vorschäler (19), der von einem schrägen Messer (21) gebildet wird, dessen Unterkante (22) geneigt zum Unterteil in Richtung der benachbarten Fläche des Druckrades (4) verläuft und bis zu ihm hin, sich oberhalb der Furche (15) und hinter dem Meßrad (5) um ein horizontales Teil verlängert, von einem gelenkig um eine transversale Achse, vorzugsweise die Achse (3) der Rolle angeordneten Arm (23) getragen wird und sich abstützt durch eine Kufe (24) auf der Sohle der Spur (17) des Meßrades (5).

5. Präzisions-Sämaschine nach einem der Ansprüche 1 und 4, **dadurch gekennzeichnet**, daß sie zwischen der Achse (55) des Druckrades (56) und der Achse des Meßrades (64) eine Vorrichtung (59) trägt, die deren relative Exzentrizität wenigstens in vertikaler Richtung erlaubt.

6. Präzisions-Sämaschine nach Anspruch 5, **dadurch gekennzeichnet**, daß das Meßrad (64) unter Zwischenschaltung einer Exzenterbuchse (59) auf der Achse (55) des Druckrades (56) angeordnet ist.

7. Präzisions-Sämaschine nach Anspruch 6, **dadurch gekennzeichnet**, daß die Exzentrizität durch Drehen der Achse des Meßrades regelbar ist, auf der die Exzenterbuchse (59) drehfest (60) angeordnet ist.

8. Präzisions-Sämaschine nach einem der Ansprüche 5 und 7, **dadurch gekennzeichnet**, daß das Meßrad (64) über einen großen Kreis (66) seiner Seitenfläche in Gleitkontakt mit der benachbarten ebenen Seitenfläche des Druckrades (56) steht.

9. Präzisions-Sämaschine nach einem der Ansprüche 5 und 8, **dadurch gekennzeichnet**, daß eine Antriebsvorrichtung des Käfigankertyps das Meßrad (64) und das Druckrad (56) verbindet, wobei Speichen (70) im konstanten Winkelabstand radial von der Nabe des Meßrades (64) wegstreben und sich zwischen Stifte (69) erstrecken, die den gleichen Winkelabstand haben wie die Speichen des Meßrades und von den benachbarten Seitenflächen des Druckrades (56) getragen werden.

10. Präzisions-Sämaschine nach einem der Ansprüche 5 und 8, **dadurch gekennzeichnet**, daß die Exzentrizität zur Hori zontalen des Meßrades (64, 65) bezüglich des Druckrades (56) so beschaffen ist, daß die Entfernung zwischen dem Umfang des Druckrades (56) und dem Umfang des Meßrades (64, 65) nach hinten größer ist oder wenigstens gleich wie vorn im Sinne der Vorwärtsbewegung der Sämaschine.

EP 0 331 560 B1

Fig:1

Fig:2

Fig:3

8

Fig. 4

Fig. 5

Fig. 6